# EUROPEAN PATENT APPLICATION

(11) **EP 4 563 215 A1**
(43) Date of publication of application: **04.06.2025**
(21) Application number: 23896218.7
(22) Date of filing: 25.09.2023
(51) Int. Cl.: B01D 53/86, B01D 46/12, H01M 50/30, H01M 50/35

(54) **EXHAUST TREATMENT DEVICE, BATTERY, AND VEHICLE COMPRISING SAME**

(30) Priority: 02.12.2022 CN 202211539947
(71) Applicant: Deepal Automobile Technology Co., Ltd., Chongqing 401133 (CN)
(72) Inventor: QI, Pengfei, Chongqing 401135 (CN); YANG, Xu, Chongqing 401135 (CN); YANG, Huiqian, Chongqing 401135 (CN); ZHANG, Youqun, Chongqing 401135 (CN); WEI, Yaping, Chongqing 401135 (CN)
(74) Representative: DREISS Patentanwälte PartG mbB
(86) International application number: PCT/CN2023/121072
(87) International publication number: WO 2024/114061

(57) **Abstract**

An exhaust treatment device (1). The exhaust treatment device (1) comprises: first filtering portions (11) and a second filtering portion (12). The first filtering portions (11) form a first channel; the first channel is internally provided with filtering sheets suitable for sealing the first channel; and the filtering sheets are suitable for enabling the first channel to be communicated when the pressure of an air let of the first channel reaches a preset pressure. The second filtering portion (12) forms a second channel; the second channel is communicated with the first channel; and at least part of the inner wall of the second channel is coated with a catalyst layer.

## Description

### CROSS-REFERENCE TO RELATED APPLICATION

This application claims priority to Chinese patent application No. 202211539947.0, titled "EXHAUST TREATMENT DEVICE, BATTERY, AND VEHICLE COMPRISING SAME" and filed on December 2, 2022, the entire contents of which are incorporated herein by reference.

### TECHNICAL FIELD

The present disclosure relates to the field of battery technology for new energy vehicles, and in particular to an exhaust treatment device, a battery, and a vehicle including same.

### BACKGROUND

With the rapid development of China's new energy vehicle industry, safety incidents involving new energy vehicles occur frequently while the market share of new energy vehicles is continuously increasing. When a battery pack of a new energy vehicle fails due to thermal runaway, a large amount of effluents are produced, with smoke being able to be discharged in large quantities outside the battery pack. The smoke contains a significant number of particles and toxic gases, which seriously endangers the health of passengers in the new energy vehicle and significantly reduces a quality of the new energy vehicle.

The patent with publication No. CN108091947A, titled "SAFETY PREVENTION SYSTEM OF POWER BATTERY PACK FOR ELECTRIC VEHICLE", discloses a safety prevention system of a power battery pack for an electric vehicle, which is primarily for diagnosing thermal runaway but does not address effluents produced by battery cells due to thermal runaway. The patent with publication No. CN214492726U, titled "NEW TYPE OF EXHAUST DEVICE FOR ELECTRIC VEHICLE BATTERY PACK", discloses a new type of exhaust device for an electric vehicle battery pack, which only guarantees that gases generated after thermal runaway can be quickly discharged from the battery pack, but does not deal with the discharged smoke, thus failing to effectively ensure passenger safety. Therefore, designing an exhaust treatment device that makes the discharged gas colorless and non-toxic to protect passenger safety has become an urgent issue in this field.

### SUMMARY

The present disclosure aims to solve at least one of the technical problems in the related art.

To this end, an objective of the present disclosure is to provide an exhaust treatment device.

Another objective of the present disclosure is to provide a battery including the above-mentioned exhaust treatment device.

Yet another objective of the present disclosure is to provide a vehicle including the above-mentioned battery.

According to an embodiment of the present disclosure, an exhaust treatment device includes: a first filtering portion having a first channel, a filtering sheet for sealing the first channel being provided in the first channel, and the filtering sheet being adapted to open the first channel when a pressure of an air inlet of the first channel reaches a predetermined pressure; and a second filtering portion having a second channel in communication with the first channel, at least part of an inner wall of the second channel being coated with a catalytic layer.

With the exhaust treatment device according to the embodiment of the present disclosure, particles are filtered out and adsorbed by the first filtering portion, and harmful gases are catalyzed by the second filtering portion, in such a manner that gases discharged outside a battery are colorless and non-toxic, which protects passenger safety and avoids environmental pollution.

In addition, the exhaust treatment device according to the above embodiment of the present disclosure may have the following additional technical features.

According to an example of the present disclosure, at least part of an edge of the filtering sheet has a first connection edge, and at least another part of the edge of the filtering sheet has a second connection edge, the first connection edge and the second connection edge being each connected to an inner wall of the first channel. One of the first connection edge and the second connection edge is disconnected from the inner wall of the first channel to open the first channel when the pressure of the air inlet of the first channel reaches the predetermined pressure; and/or the filtering sheet has a third connection edge located between the first connection edge and the second connection edge, the third connection edge being disconnected to open the first channel when the pressure of the air inlet of the first channel reaches the predetermined pressure.

According to an example of the present disclosure, the filtering sheet includes: a plurality of first filtering sheets, at least part of an edge of each of the plurality of first filtering sheets being constructed as the first connection edge or the second connection edge, the plurality of first filtering sheets being connected to the inner wall of the first channel through the first connection edge or the second connection edge; and a second filtering sheet, at least part of an edge of the second filtering sheet being constructed as the third connection edge, the second filtering sheet being connected to at least one of the plurality of first filtering sheets through the third connection edge.

According to an example of the present disclosure, the exhaust treatment device further includes a third filtering sheet, at least part of an edge of the third filtering sheet being constructed as the third connection edge, the third filtering sheet being connected to at least another part of the edge of the second filtering sheet through the third connection edge.

According to an example of the present disclosure, two first filtering sheets are provided, the two first filtering sheets being disposed at inner walls of the first channel that are directly opposite to each other, respectively; and a plurality of second filtering sheets are provided and sequentially connected, the plurality of second filtering sheets being connected at sides of the two first filtering sheets facing towards each other.

According to an example of the present disclosure, in the plurality of second filtering sheets, two second filtering sheets that are connected to each other are hinged.

According to an example of the present disclosure, the third connection edge has a magnetic attraction member.

According to an example of the present disclosure, projections of the first filtering sheets in a direction perpendicular to an extension direction of the first channel overlap projections of the plurality of second filtering sheets in the direction perpendicular to the extension direction of the first channel.

According to an example of the present disclosure, the filtering sheet includes: a filtering cartridge; and a filtering plate disposed at at least a side of the filtering cartridge in a thickness direction of the filtering cartridge, the filtering plate having a filtering hole.

According to an example of the present disclosure, the second filtering portion includes: an outer frame portion having an accommodation cavity penetrating the outer frame portion in an airflow direction; and a catalytic portion disposed in the accommodation cavity, the catalytic portion having a plurality of second channels arranged at intervals.

According to an example of the present disclosure, a cross section of the second channel is formed as a regular polygon.

According to an embodiment of the present disclosure, a battery includes the above-mentioned exhaust treatment device.

According to an embodiment of the present disclosure, a vehicle includes the above-mentioned battery.

Additional aspects and advantages of the present disclosure will be provided at least in part in the following description, or will become apparent at least in part from the following description, or can be learned from practicing of the present disclosure.

### BRIEF DESCRIPTION OF DRAWINGS

FIG. 1 is a schematic structural view of an exhaust treatment device according to an embodiment of the present disclosure.
FIG. 2 is a sectional view of a first filtering portion according to an embodiment of the present disclosure.

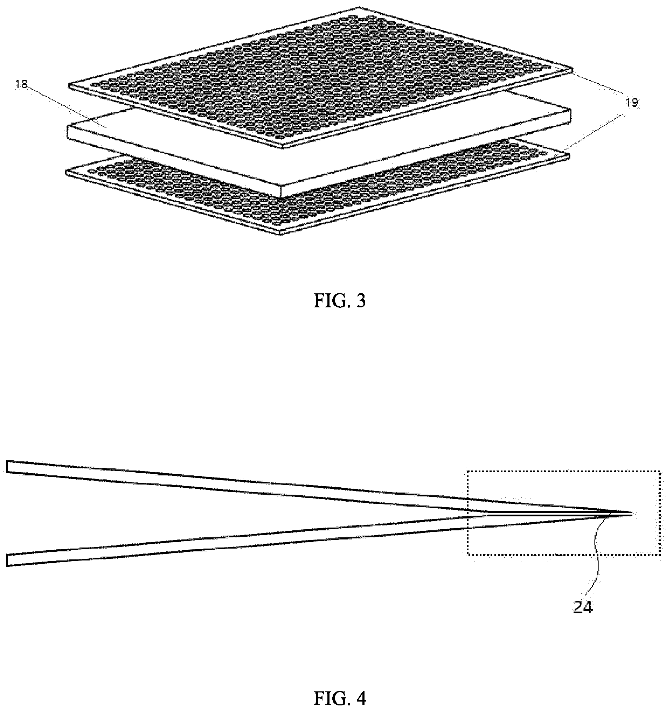

FIG. 3 is a schematic structural view of a filtering sheet according to an embodiment of the present disclosure.
FIG. 4 is a schematic view of a connection method for filtering sheets according to an embodiment of the present disclosure.
FIG. 5 is a view of a failure state of a first filtering portion according to an embodiment of the present disclosure.
FIG. 6 is a side view of a second filtering portion according to an embodiment of the present disclosure.
FIG. 7 is a schematic view of a cross section of a catalytic portion according to an embodiment of the present disclosure.
FIG. 8 is a side view of a first filtering portion according to another embodiment of the present disclosure.

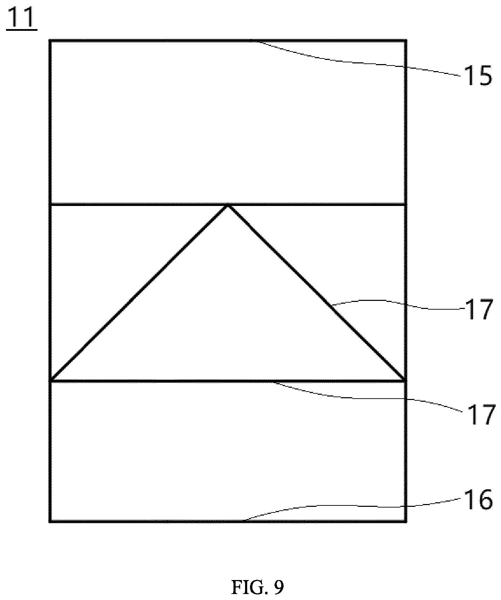

FIG. 9 is a front view of a first filtering portion according to another embodiment of the present disclosure.

Reference numerals of the accompanying drawings:
exhaust treatment device 1,
first filtering portion 11, second filtering portion 12, first filtering sheet 13, second filtering sheet 14, first connection edge 15, second connection edge 16, third connection edge 17, filtering cartridge 18, filtering plate 19, outer frame portion 20, catalytic portion 21, air inlet 22, exhaust opening 23, magnetic attraction member 24, third filtering sheet 25.

### DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

An exhaust treatment device according to embodiments of the present disclosure is described in detail below with reference to the accompanying drawings.

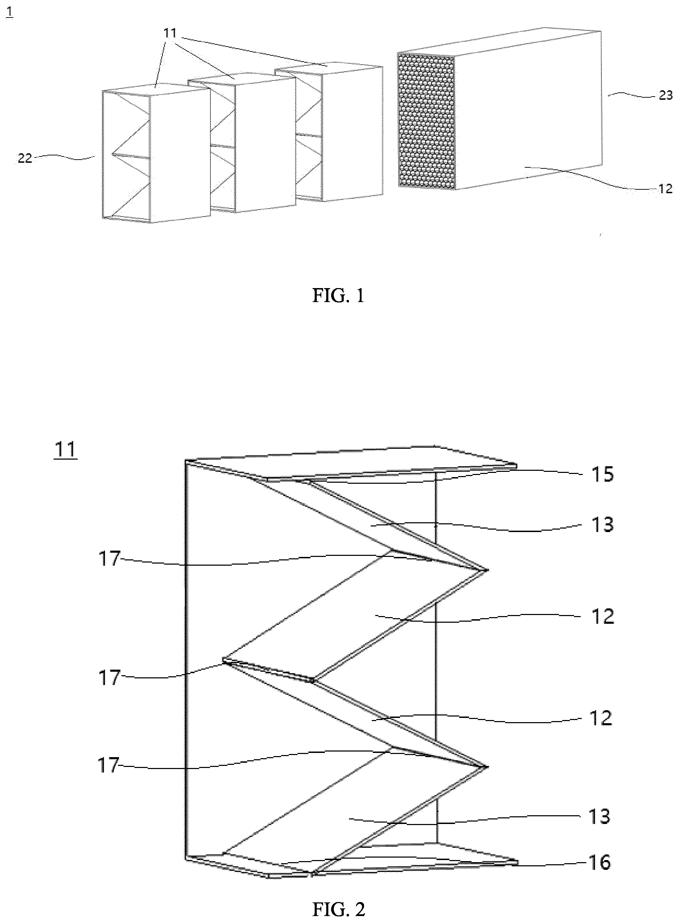

As illustrated in FIG. 1, an exhaust treatment device 1 according to an embodiment of the present disclosure includes a first filtering portion 11 and a second filtering portion 12.

Specifically, a first filtering portion 11 has a first channel. A filtering sheet for sealing the first channel is provided in the first channel. The filtering sheet is adapted to open the first channel when a pressure of an air inlet 22 of the first channel reaches a predetermined pressure.

A second filtering portion 12 has a second channel in communication with the first channel. At least part of an inner wall of the second channel is coated with a catalytic layer.

With the exhaust treatment device 1 according to the embodiment of the present disclosure, the first filtering portion 11 and the second filtering portion 12 are disposed in an airway of a battery pack. The first filtering portion 11 is configured to filter out and adsorb particles. The second filtering portion 12 is configured to catalyze a conversion of harmful gases into harmless gases. In this way, harmful gases and particles generated when the battery pack fails can be effectively reduced to prevent harmful matters from being discharged out of the battery pack, improving passenger safety, and enhancing a quality of a new energy vehicle. Specifically, the first filtering portion 11 is internally provided with the filtering sheet configured to filter out particles, and at least part of an inner wall of the second filtering portion 12 is coated with a catalytic layer configured to convert harmful gases into harmless gases.

Further, a quantity of filtering sheets in the first filtering portion should be set based on a nominal capacity of a single battery cell in the battery pack. When the capacity of the battery cell is less than or equal to 100 Ah, two filtering sheets should be set. When the capacity of the battery cell is greater than 100 Ah and less than or equal to 200 Ah, four filtering sheets should be set. When the capacity of the battery cell is greater than 200 Ah, five filtering sheets should be set. A quantity of second filtering portions should be set based on the nominal capacity of the single battery cell in the battery pack. When the capacity of the battery cell is less than or equal to 100 Ah, one second filtering portion should be set. When the capacity of the battery cell is greater than 100 Ah, two second filtering portions should be set. With the above scheme, the harmful gases and the particles generated when the battery pack fails can be better reduced to prevent the harmful matters from being discharged out of the battery pack, improving the passenger safety, and enhancing the quality of the new energy vehicle.

According to an example of the present disclosure, at least part of an edge of the filtering sheet has a first connection edge 15, and at least another part of the edge of the filtering sheet has a second connection edge 16. The first connection edge 15 and the second connection edge 16 are each connected to an inner wall of the first channel. The inner wall includes a left side wall, a right side wall, an upper wall, and a bottom wall. The first connection edge 15 at the filtering sheet is connected to the upper wall in the first channel. The second connection edge 16 is connected to the bottom wall of the first channel. One of the first connection edge 15 and the second connection edge 16 is disconnected from the inner wall of the first channel to open the first channel when the pressure of the air inlet 22 of the first channel reaches the predetermined pressure; and/or the filtering sheet has a third connection edge 17 located between the first connection edge 15 and the second connection edge 16. The third connection edge 17 is disconnected to open the first channel when the pressure of the air inlet 22 of the first channel reaches the predetermined pressure.

Specifically, the first connection edge 15 and the second connection edge 16 of the filtering sheet are each connected to the inner wall of the first channel. That is, the first channel is sealed by the filtering sheet. When the battery pack fails, the harmful gases and the particles generated flow into the first channel in the first filtering portion 11, and thus the filtering sheet filters out and adsorbs a large number of particles. When the adsorbed particles are too much, i.e., when the filtering sheet is close to a failure, an internal pressure of the battery pack gradually increases. When the pressure of the air inlet 22 of the first channel reaches the predetermined pressure, one of the first connection edge 15 and the second connection edge 16 and/or the third connection edge 17 between the first connection edge 15 and the second connection edge 16 is/are disconnected to open the first channel, which avoids an excessive flow resistance in the first filtering portion 11, preventing problems such as a seal failure due to an excessive pressure inside the battery pack.

Further, when the pressure of the air inlet 22 of the first channel reaches the predetermined pressure, one of the first connection edge 15 and the second connection edge 16, and/or the third connection edge 17 between the first connection edge 15 and the second connection edge 16 is/are disconnected to open the first channel, in such a manner that flow of the harmful gases and the particles to a next filtering sheet is facilitated to initiate adsorption of the particles by the next filtering sheet. This process is repeated cyclically, until an ending filtering sheet is opened, at which point the first filtering portion 11 becomes completely ineffective.

Specifically, when one filtering sheet is provided, i.e., the filtering sheet has the first connection edge 15 and the second connection edge 16, the filtering sheet is connected to the inner wall of the first channel through the first connection edge 15 and the second connection edge 16. When the pressure reaches the predetermined pressure, the first connection edge 15 or the second connection edge 16 is disconnected to open the first channel.

When two filtering sheets are provided, one of the two filtering sheets has the first connection edge 15 and the other of the two filtering sheets has the second connection edge 16. The two filtering sheets are connected to the inner wall of the first channel through the first connection edge 15 and the second connection edge 16. The two filtering sheets are connected to each other through the third connection edge 17. The third connection edge 17 is disconnected to open the first channel when the pressure reaches the predetermined pressure.

According to an example of the present disclosure, the filtering sheet includes a plurality of first filtering sheets 13 and a second filtering sheet 14. At least part of an edge of each of the plurality of first filtering sheets 13 is constructed as the first connection edge 15 or the second connection edge 16. Each of the plurality of first filtering sheets 13 is connected to the inner wall of the first channel through the first connection edge 15 or the second connection edge 16. At least part of an edge of the second filtering sheet 14 is constructed as the third connection edge 17. The second filtering sheet 14 is connected to at least one of the plurality of first filtering sheets 13 through the third connection edge 17.

An outer peripheral edge of the first filtering sheet 13 is formed by the first connection edge 15 and the second connection edge 16 that are sequentially connected. An outer periphery of the first filtering sheet 13 is connected to the inner wall of the first channel. The first filtering sheet 13 has a through hole. An outer peripheral edge of the second filtering sheet 14 has the third connection edge 17. The third connection edge 17 is adjacent to an inner periphery of the through hole. When a pressure in a communication channel reaches the predetermined pressure, the third connection edge 17 is disconnected to open the first channel. The third connection edge 17 may be constructed as a curve, a straight line, or a combination of a curve and a straight line.

According to an example of the present disclosure, the exhaust treatment device 1 further includes a third filtering sheet 25. At least part of an edge of the third filtering sheet 25 is constructed as the third connection edge 17. The third filtering sheet 25 is connected to at least another part of the edge of the second filtering sheet 14 through the third connection edge 17.

By constructing the at least part of the edge of the third filtering sheet 25 as the third connection edge 17 and enabling the third filtering sheet 25 to be connected to the at least another part of the edge of the second filtering sheet 14 through the third connection edge 17, a disconnection path of the entire filtering sheet when the pressure of the air inlet 22 of the first channel reaches the predetermined pressure is prolonged, which avoids the excessive flow resistance in the first filtering portion 11, preventing the problems such as the seal failure due to the excessive pressure inside the battery pack. In addition, prolonging the disconnection path also ensures that unabsorbed particles pass through the failed filtering sheet to be filtered out and adsorbed by a next filtering sheet.

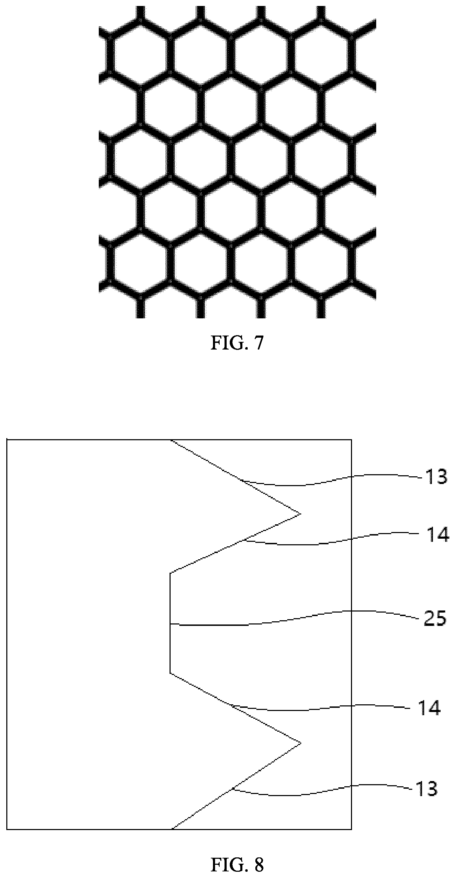

Specifically, as illustrated in FIG. 8, when five filtering sheets are provided, one of two filtering sheets in the five filtering sheets has the first connection edge 15, and the other has the second connection edge 16. The two filtering sheets are connected to the inner wall of the first channel through the first connection edge 15 and the second connection edge 16, respectively. The remaining three filtering sheets are connected end to end sequentially through the third connection edges 17 and are connected to another end of each of the above two filtering sheets through the third connection edge 17. The first filtering sheet 13 is connected to the inner wall. The second filtering sheet 14 is connected to the first filtering sheet 13. The third filtering sheet 25 is connected only to the second filtering sheet 14. When the pressure in the communication channel reaches the predetermined pressure, the third connection edge 17 is disconnected to open the first channel.

According to an example of the present disclosure, two first filtering sheets 13 are provided. The two first filtering sheets 13 are disposed at inner walls of the first channel that are directly opposite to each other, respectively. A plurality of second filtering sheets 14 are provided and sequentially connected. The plurality of second filtering sheets 14 are connected at sides of the two first filtering sheets 13 facing towards each other. By providing the two first filtering sheets 13 and the plurality of second filtering sheets 14 sequentially connected and enabling the plurality of second filtering sheets 14 to be connected at the sides of the two first filtering sheets 13 facing towards each other, the disconnection path of the filtering sheet is prolonged, which avoids the excessive flow resistance in the first filtering portion 11, avoiding the problems such as the seal failure due to the excessive pressure inside the battery pack.

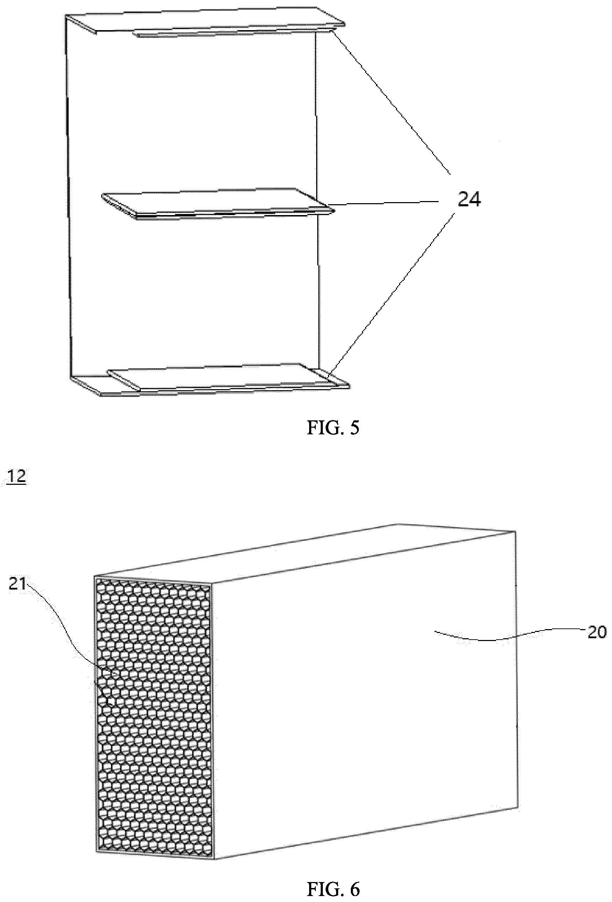

According to an example of the present disclosure, two second filtering sheets 14 that are connected to each other are hinged. A hinge disposed between the two second filtering sheets 14 that are connected to each other restricts swaying of the two second filtering sheets 14. When the third connection edge 17 is disconnected due to an excessive pressure, the two second filtering sheets 14 that are connected to each other collapse towards each other. Since the hinge restricts the swaying of the two second filtering sheets 14 that are connected to each other, the two collapsed second filtering sheets 14 can be kept horizontal as illustrated in FIG. 5. A hinged connection of the two second filtering sheets 14 reinforces connection strength between the two second filtering sheets 14. Further, in a case where one of the first connection edge 15 and the second connection edge 16, and/or the third connection edge 17 between the first connection edge 15 and the second connection edge 16 is/are disconnected when the pressure of the air inlet 22 of the first channel reaches the predetermined pressure, the two second filtering sheets 14 that are connected to each other can collapse towards each other to allow for a larger flow channel, which avoids clogging of particles, preventing the problems such as the excessive pressure inside the battery pack.

According to an example of the present disclosure, the third connection edge 17 has a magnetic attraction member 24. Since the third connection edge 17 has the magnetic attraction member 24, and a connection method at the third connection edge 17 is magnetic adsorption, the internal pressure of the battery pack gradually increases when the filtering sheet adsorbs too many particles and becomes clogged. When the pressure reaches the predetermined pressure, the magnetic attraction member 24 at the third connection edge 17 is pushed to open, which facilitates subsequent filtration and adsorption of particles by the filtering sheet, and avoids the problems such as the seal failure due to the excessive pressure inside the battery pack.

According to an example of the present disclosure, projections of the first filtering sheets 13 in a direction perpendicular to an extension direction of the first channel overlap projections of the plurality of second filtering sheets 14 in the direction perpendicular to the extension direction of the first channel. Since the projections of the first filtering sheets 13 in a direction perpendicular to an extension direction of the first channel overlap the projections of the plurality of second filtering sheets 14 in the direction perpendicular to the extension direction of the first channel, the third connection edge 17 is disconnected when the pressure between the two second filtering sheets 14 that are connected to each other or between the first filtering sheet 13 and the second filtering sheet 14 reaches the predetermined pressure, in such a manner that the two second filtering sheets 14 that are connected to each other can collapse towards each other to allow for the larger flow channel, which avoids the clogging of particles, preventing the problems such as the excessive pressure inside the battery pack.

According to an example of the present disclosure, the filtering sheet includes a filtering cartridge 18 and a filtering plate 19. The filtering plate 19 is disposed at at least a side of the filtering cartridge 18 in a thickness direction of the filtering cartridge 18. The filtering plate 19 has a filtering hole. The filtering cartridge 18 is configured to filter out and adsorb particles. Setting the filtering plate 19 at the at least one side of the filtering cartridge 18 in the thickness direction of the filtering cartridge 18 can fix a position of the filtering cartridge 18 in the first filtering portion 11, allowing the filtering cartridge 18 to be in better contact with and adsorb the particles. Since the filtering plate 19 has the filtering hole and a diameter larger than that of the particles, filtration performance of the filtering cartridge 18 is free from being affected. Further, bridging occurs during filtration of the filtering sheet, in such a manner that the filtering hole can also intercept particles having a smaller diameter than the filtering hole.

According to an example of the present disclosure, the second filtering portion 12 includes an outer frame portion 20 and a catalytic portion 21. The outer frame portion 20 has an accommodation cavity. The accommodation cavity penetrates the outer frame portion 20 in an airflow direction. The catalytic portion 21 is disposed in the accommodation cavity. The catalytic portion 21 has a plurality of second channels arranged at intervals. Specifically, when the harmful gases enter the second filtering portion 12 and come into contact with the catalytic portion 21 in the accommodation cavity, a catalytic substance at the catalytic portion 21 converts the harmful gases into harmless gases. In this way, colorless and non-toxic gases are discharged from the battery exhaust opening 23, which greatly protects the passenger safety and avoids environmental pollution.

In some embodiments of the present disclosure, a cross section of the second channel is formed as a regular polygon. The cross section of the second channel may be formed as a regular hexagon. That is, the cross section of the second channel may be constructed to have a honeycomb structure. By constructing the second channel as a channel with a cross section having a honeycomb structure, structural strength of the second filtering portion 12 is improved. Also, a contact area between the harmful gases and the catalytic substance in the second channel is increased, which improves a catalytic efficiency.

A battery according to the present disclosure is briefly described below.

The battery according to the present disclosure is provided with the exhaust treatment device 1 according to any of the above embodiments. Since the battery according to the present disclosure is provided with the exhaust treatment device 1 according to any of the above embodiments, the harmful gases and the particles generated inside the battery can be catalyzed and adsorbed by the exhaust treatment device 1 inside an air channel of the battery when the thermal runaway occurs in the battery to avoid the environmental pollution.

A vehicle according to the present disclosure is briefly described below.

The vehicle according to the present disclosure is provided with the battery according to any of the above embodiments. Since the vehicle according to the present disclosure is provided with the battery according to any of the above embodiments, the exhaust treatment device 1 inside the air channel of the battery catalyzes and adsorbs the harmful gases and the particles generated by the battery when a safety accident caused by the thermal runaway of the battery occurs in the vehicle. Therefore, the gases discharged after the thermal runaway of the battery are colorless and non-toxic, which avoids the environmental pollution and ensures the passenger safety. Also, since the discharged gases are colorless and non-toxic, panic among passengers is avoided, which enables the passengers to deal with the safety accident caused by the thermal runaway of the battery more calmly.

In the description of the present disclosure, it should be understood that the orientation or the position indicated by terms such as "center", "longitudinal", "lateral", "length", "width", "thickness", "over", "below", "front", "rear", "left" , "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means two or more, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Reference throughout this specification to terms such as "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above embodiments are exemplary and should not be construed as limiting the present disclosure. Those skilled in the art can make changes, modifications, substitutions, and alternations to the above embodiments within the scope of the present disclosure.

## Claims

1. An exhaust treatment device for a battery, the exhaust treatment device comprising:
a first filtering portion (11) having a first channel, a filtering sheet for sealing the first channel being provided in the first channel, and the filtering sheet being adapted to open the first channel when a pressure of an air inlet (22) of the first channel reaches a predetermined pressure; and
a second filtering portion (12) having a second channel in communication with the first channel, at least part of an inner wall of the second channel being coated with a catalytic layer.

2. The exhaust treatment device for the battery according to claim 1, wherein at least part of an edge of the filtering sheet has a first connection edge (15), and at least another part of the edge of the filtering sheet has a second connection edge (16), the first connection edge (15) and the second connection edge (16) being each connected to an inner wall of the first channel, wherein:
one of the first connection edge (15) and the second connection edge (16) is disconnected from the inner wall of the first channel to open the first channel when the pressure of the air inlet (22) of the first channel reaches the predetermined pressure; and/or
the filtering sheet has a third connection edge (17) located between the first connection edge (15) and the second connection edge (16), the third connection edge (17) being disconnected to open the first channel when the pressure of the air inlet (22) of the first channel reaches the predetermined pressure.

3. The exhaust treatment device for the battery according to claim 2, wherein the filtering sheet comprises:
a plurality of first filtering sheets (13), at least part of an edge of each of the plurality of first filtering sheets (13) being constructed as the first connection edge (15) or the second connection edge (16), and each of the plurality of first filtering sheets (13) being connected to the inner wall of the first channel through the first connection edge (15) or the second connection edge (16); and
a second filtering sheet (14), at least part of an edge of the second filtering sheet (14) being constructed as the third connection edge (17), the second filtering sheet (14) being connected to at least one of the plurality of first filtering sheets (13) through the third connection edge (17).

4. The exhaust treatment device for the battery according to claim 3, further comprising:
a third filtering sheet (25), at least part of an edge of the third filtering sheet (25) being constructed as the third connection edge (17), the third filtering sheet (25) being connected to at least another part of the edge of the second filtering sheet (14) through the third connection edge (17).

5. The exhaust treatment device for the battery according to claim 3 or 4, wherein:
two first filtering sheets (13) are provided, the two first filtering sheets (13) being disposed at inner walls of the first channel that are directly opposite to each other, respectively; and
a plurality of second filtering sheets (14) are provided and sequentially connected, the plurality of second filtering sheets (14) being connected at sides of the two first filtering sheets (13) facing towards each other.

6. The exhaust treatment device for the battery according to claim 5, wherein in the plurality of second filtering sheets (14), two second filtering sheets (14) that are connected to each other are hinged.

7. The exhaust treatment device for the battery according to claim 5 or 6, wherein the third connection edge (17) has a magnetic attraction member (24).

8. The exhaust treatment device for the battery according to any one of claims 5 to 7, wherein projections of the first filtering sheets (13) in a direction perpendicular to an extension direction of the first channel overlap projections of the plurality of second filtering sheets (14) in the direction perpendicular to the extension direction of the first channel.

9. The exhaust treatment device for the battery according to any one of claims 2 to 8, wherein the filtering sheet comprises:
a filtering cartridge (18); and
a filtering plate (19) disposed at at least a side of the filtering cartridge (18) in a thickness direction of the filtering cartridge (18), the filtering plate (19) having a filtering hole.

10. The exhaust treatment device for the battery according to any one of claims 1 to 9, wherein the second filtering portion (12) comprises:
an outer frame portion (20) having an accommodation cavity penetrating the outer frame portion (20) in an airflow direction; and
a catalytic portion (21) disposed in the accommodation cavity, the catalytic portion having a plurality of second channels arranged at intervals.

11. The exhaust treatment device for the battery according to claim 10, wherein a cross section of the second channel is formed as a regular polygon.

12. A battery, comprising the exhaust treatment device according to any one of claims 1 to 11.

13. A vehicle, comprising the battery according to claim 12.
